# EUROPEAN PATENT APPLICATION

(11) **EP 4 723 739 A1**
(43) Date of publication of application: **08.04.2026**
(21) Application number: 24835220.5
(22) Date of filing: 18.06.2024
(51) Int. Cl.: H04W 36/08

(54) **COMMUNICATION METHOD AND APPARATUS**

(30) Priority: 04.07.2023 CN 202310816963
(71) Applicant: Huawei Technologies Co., Ltd., Shenzhen, Guangdong 518129 (CN)
(72) Inventor: TANG, Guowang, Shenzhen, Guangdong 518129 (CN); ZHANG, Yu, Shenzhen, Guangdong 518129 (CN); TIAN, Lianbing, Shenzhen, Guangdong 518129 (CN); HU, Ziyang, Shenzhen, Guangdong 518129 (CN)
(74) Representative: Goddar, Heinz J.
(86) International application number: PCT/CN2024/099868
(87) International publication number: WO 2025/007737

(57) **Abstract**

A communication method and apparatus are provided, applied to the field of communication technologies, may be applied to a wireless local area network system of 802.11 series protocols such as the IEEE 802.11a/b/g protocol, the 802.11n protocol, the 802.11ac protocol, the 802.11ax protocol, the 802.11be protocol, the 802.11bn protocol, and the integrated millimeter wave (IMMW) protocol, and may be further applied to a WPAN system that supports UWB, a sensing system, and the like. A STA communicates with a first AP. In a process in which the STA communicates with the first AP, the STA maintains a connected state with a second AP, and a MAC address used when the STA communicates with the first AP is the same as a MAC address used when the STA maintains the connected state with the second AP. The STA is handed over to the second AP, and communicates with the second AP. According to the method provided in embodiments of this application, a network handover delay is effectively reduced.

## Description

This application claims priority to Chinese Patent Application No. 202310816963.8, filed with the China National Intellectual Property Administration on July 4, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With the rapid development of wireless network technologies, almost all wireless router hotspots that support Wi-Fi networks support a 5 GHz frequency band, and the Wi-Fi 6E standard that supports a 6 GHz frequency band is also emerging. Hotspots such as routers can support a plurality of networks in frequency bands such as 2G and 5G at the same time, and even support a plurality of networks in a same frequency band, for example, support guest networks.

Generally, one household uses one or more routers. The router enables at least two networks in the 2 GHz frequency band, the 5 GHz frequency band, and the like at the same time. Generally, a plurality of terminal devices (such as a computer, a mobile phone, and a panel light) are connected to a network formed by the router hotspot. When network handover is triggered due to a reason like network quality deterioration, a network handover delay is high.

Therefore, how to reduce the delay is a problem that is being studied by a person skilled in the art.

### SUMMARY

Embodiments of this application provide a communication method and apparatus, to effectively reduce a network handover delay and a delay in transmitting and receiving data by a station (station, STA).

According to a first aspect, an embodiment of this application provides a communication method. The method may be applied to a Wi-Fi device like a STA, or may be applied to a Wi-Fi chip, a module, or the like. The Wi-Fi chip or the module may be disposed in the STA. The method includes:
communicating with a first access point (access point, AP), where in a process in which a STA communicates with the first AP, the STA maintains a connected state with a second AP, and a medium access control (medium access control, MAC) address used when the STA communicates with the first AP is the same as a MAC address used when the STA maintains the connected state with the second AP; and the STA is handed over to the second AP, and communicates with the second AP.

In this embodiment of this application, in a process in which the station communicates with the first AP, the station maintains the connected state with the second AP, so that the station can be quickly and effectively handed over to the second AP. This reduces a network handover delay, so that the station can perform data transmission with minimal interruption, reduces a delay in transmitting and receiving data by the STA, and improves user experience.

In a possible implementation, in a process in which the STA communicates with the second AP, the STA maintains the connected state with the first AP.

In this embodiment of this application, the MAC address used when the STA communicates with the second AP is the same as the MAC address used when the STA maintains the connected state with the first AP.

In a possible implementation, in a process in which the STA communicates with the second AP, the STA maintains the connected state with a third AP.

In this embodiment of this application, in a process in which the STA communicates with an AP, the STA may maintain the connected state with one or more APs (an AP other than an AP).

In a possible implementation, the first AP and the second AP belong to a same extended service set (extended service set, ESS), or a service set identifier (service set identifier, SSID) of the second AP and a service set identifier of the first AP are different. Generally, if the first AP and the second AP belong to the same ESS, when the STA separately communicates with the two APs by using different MAC addresses, the two APs consider the STA to be different STAs. For example, the second AP considers a STA that communicates with the first AP is different from a STA that communicates with the second AP. Therefore, the second AP re-initiates a connection, resulting in communication interruption of the STA.

In this embodiment of this application, when the first AP and the second AP belong to the same ESS, the STA separately communicates with the first AP and the second AP by using a same MAC address, so that a case in which communication of the STA is interrupted because the second AP re-initiates a connection can be effectively avoided, thereby reducing a delay in transmitting and receiving data by the STA. This improves user experience.

In a possible implementation, the STA stores information about the second AP.

In a possible implementation, that the STA maintains the connected state with the second AP includes: The STA maintains the connected state with the second AP through a medium access control MAC layer and a physical (physical, PHY) layer.

That the STA communicates with the first AP includes: The STA communicates with the first AP through the MAC layer, the PHY layer, and a transmission control protocol/internet protocol (transmission control protocol/internet protocol, TCP/IP) layer.

In a possible implementation, handing over to the second AP includes: The STA is handed over to the second AP when a first handover condition is met.

In a possible implementation, handing over to the second AP includes: handing over to the second AP when at least one of the following is met: signal quality between the STA and the first AP is less than or equal to a quality threshold; a communication link between the STA and the first AP is disconnected; and the signal quality between the STA and the first AP is less than signal quality between the STA and the second AP.

In a possible implementation, handing over to the second AP includes: handing over to the second AP when at least one of the following is met: an amount of cached data of the STA is greater than or equal to a data amount threshold; a probability that the STA successfully sends data is less than or equal to a probability threshold; and a delay between sending data and receiving a response frame of the data by the STA is greater than or equal to a delay threshold.

In a possible implementation, the method further includes: handing over to the first AP, where the STA communicates with the first AP.

In a possible implementation, the method further includes: handing over to a third AP, where the STA communicates with the third AP.

According to a second aspect, an embodiment of this application provides a communication apparatus, configured to perform the method in any one of the first aspect or the possible implementations. The communication apparatus includes a module configured to perform the method in any one of the first aspect or the possible implementations.

According to a third aspect, an embodiment of this application provides a communication apparatus. The communication apparatus includes a processor configured to perform the method in any one of the first aspect or the possible implementations. The processor is configured to execute a program stored in a memory. When the program is executed, the method in any one of the first aspect or the possible implementations are performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together. For example, the communication apparatus may be a chip.

In a possible implementation, the communication apparatus further includes a transceiver. The transceiver is configured to receive information or send information. For example, the communication apparatus may be a Wi-Fi device.

According to a fourth aspect, an embodiment of this application provides a communication apparatus. The communication apparatus includes a logic circuit and an interface. The logic circuit is coupled to the interface. The interface is configured to input and/or output information. The logic circuit is configured to perform the method in any one of the first aspect or the possible implementations.

According to a fifth aspect, an embodiment of this application provides a computer-readable storage medium. The computer-readable storage medium is configured to store a computer program, and when the computer program is run on a computer, the method in any one of the first aspect or the possible implementations is enabled to be performed.

According to a sixth aspect, an embodiment of this application provides a computer program product. The computer program product includes a computer program or computer code, and when the computer program or the computer code is run on a computer, the method in any one of the first aspect or the possible implementations is enabled to be performed.

According to a seventh aspect, an embodiment of this application provides a computer program. When the computer program is run on a computer, the method in any one of the first aspect or the possible implementations is performed.

According to an eighth aspect, an embodiment of this application provides a communication system, where the communication system includes a STA and an AP, and the STA is configured to perform the method in any one of the first aspect or the possible implementations of the first aspect.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 and FIG. 4 are diagrams of communication scenarios according to an embodiment of this application;
FIG. 5a and FIG. 5b are diagrams of scenarios of communication methods according to an embodiment of this application;
FIG. 6a to FIG. 6c are schematic flowcharts of communication according to an embodiment of this application;
FIG. 7a and FIG. 7b are schematic flowcharts of a communication method A;
FIG. 8 is a simulation diagram according to an embodiment of this application; and
FIG. 9 to FIG. 11 each are a schematic diagram of a structure of a communication apparatus according to an embodiment of this application.

### DESCRIPTION OF EMBODIMENTS

For ease of understanding technical solutions of this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two, three, or more, and "and/or" is used to describe an association between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

Embodiments of this application provide a communication method and apparatus, to effectively reduce a network handover delay, thereby reducing a delay in transmitting and receiving data by a STA. In embodiments of this application, before the STA is handed over to a network, the STA may establish a backup link in advance. For example, the STA establishes a connection to a second AP to form the backup link, and the STA may further continue to perform data communication with a first AP. Therefore, when the station needs to perform network handover, the station may be directly handed over to the second AP. In this way, a network handover delay can be effectively reduced, a network disconnection can be alleviated, a delay in transmitting and receiving data by the STA can be reduced, and user experience can be improved.

The following describes in detail a communication system in embodiments of this application.

The technical solutions provided in embodiments of this application may be applied to a WLAN system, for example, Wi-Fi. The method provided in embodiments of this application is applicable to the IEEE 802.11 series protocols, for example, the 802.11a/b/g protocol, the 802.11n protocol, the 802.11ac protocol, the 802.11ax protocol, the 802.11be protocol, the 802.11bn protocol, the integrated millimeter wave (integrated millimeter wave, IMMW) protocol, and a next-generation protocol. Examples are not listed one by one. The technical solutions provided in embodiments of this application may be further applied to a wireless personal area network (wireless personal area network, WPAN) based on an ultra wideband (ultra wideband, UWB) technology. For example, the method provided in embodiments of this application is applicable to the IEEE 802.15 series protocols, for example, the 802.15.4a protocol, the 802.15.4z protocol, the 802.15.4ab protocol, or a future generation UWB WPAN protocol. Examples are not listed one by one. The technical solutions provided in embodiments of this application may be further applied to the following communication systems, for example, an internet of things (internet of things, IoT) system, a vehicle to X (vehicle to X, V2X) system, a narrow band internet of things (narrow band internet of things, NB-IoT) system, a Long Term Evolution (long term evolution, LTE) system, a 5th generation (5th-generation, 5G) communication system, and a new communication system emerging in future communication development.

The WLAN system can provide high-rate and low-latency transmission. With continuous evolution of WLAN application scenarios, the WLAN system is to be applied to more scenarios or industries, for example, the internet of things industry, the internet of vehicles industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the internet of things, an entertainment terminal (for example, a wearable device like an augmented reality (augmented reality, AR) device or a virtual reality (virtual reality, VR) device), a smart device (for example, a printer, a projector, a loudspeaker, or a speaker) in a smart office, a vehicle to X device in the vehicle to X, an infrastructure (for example, a vending machine, a self-service navigation console in a shopping mall or supermarket, a self-service cashier, or a self-service ordering machine) in a daily life scenario, a device in a large sports and music venue, or the like.

Although embodiments of this application mainly use the WLAN as an example, embodiments of this application are especially applied to a network of the IEEE 802.11 series standards. For example, in embodiments of this application, Wi-Fi 7 may be supported, which may also be referred to as an extremely high-throughput (extremely high-throughput, EHT). For another example, in embodiments of this application, Wi-Fi 8 may be supported, which may also be referred to as ultra high reliability (ultra high reliability, UHR) or ultra high reliability and throughput (ultra high reliability and throughput, UHRT). For another example, IMMW is supported. Details are not listed herein again. Aspects in embodiments of this application may be extended to other networks via various standards or protocols, for example, Bluetooth (Bluetooth), a high performance radio LAN (high performance radio LAN, HIPERLAN) (a wireless standard similar to the IEEE 802.11 standard, mainly used in Europe), a wide area network (wide area network, WAN), or another network that is known or developed in the future.

In a possible implementation, the method provided in embodiments of this application may be implemented by a communication apparatus in a communication system. For example, the communication apparatus may be an access point (access point, AP) or a station (station, STA).

The access point is an apparatus having a wireless communication function, supports communication or sensing according to a WLAN protocol, has a function of communicating with or sensing another device (for example, a non-AP STA or another access point) in a WLAN network, and certainly may further have a function of communicating with or sensing another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having a wireless communication function may be an entire device, or may be a chip, a processing system, a functional module, or the like installed in an entire device. The device in which the chip, the processing system, or the functional module is installed may implement a method, a function, and the like in embodiments of this application under control of the chip, the processing system, or the functional module. The AP in embodiments of this application is an apparatus that provides a service for the non-AP STA, and may support the 802.11 series protocols or subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to over one hundred meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in the foregoing devices in various forms, to implement the method and the function in embodiments of this application.

The STA is an apparatus having a wireless communication function, supports communication or sensing according to the WLAN protocol, and has a capability of communicating with or sensing another non-AP STA or access point in a WLAN network. In the WLAN system, the station may be referred to as a non-access point station (non-access point station, non-AP STA). For example, the STA is any user communication device that allows a user to communicate with or sense an AP to communicate with a WLAN. The apparatus having a wireless communication function may be an entire device, or may be a chip, a processing system, a functional module, or the like installed in the entire device. A device in which the chip, the processing system, or the functional module is installed may implement the method and the function in embodiments of this application under control of the chip, the processing system, or the functional module. For example, the STA may be a wireless communication chip, a wireless sensor, a wireless communication terminal, or the like, and may also be referred to as a user. For another example, the STA may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function. Certainly, the STA may alternatively be a chip, a processing system, or a module in the foregoing devices in various forms, to implement the method and the function in embodiments of this application.

For example, a communication system to which the method provided in embodiments of this application may be applied may include an access point and a station. For example, embodiments of this application are applicable to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be further divided into downlink transmission in which the AP simultaneously sends signals to the plurality of STAs, and uplink transmission in which the plurality of STAs send signals to the AP. A WLAN communication protocol may be supported between an AP and a STA, between APs, and between STAs. The communication protocol may include the IEEE 802.11 series protocols, for example, is applicable to the 802.11n/802.11ac/802.11ax/802.11be/802.11bn protocol, and certainly is also applicable to a protocol after 802.11bn.

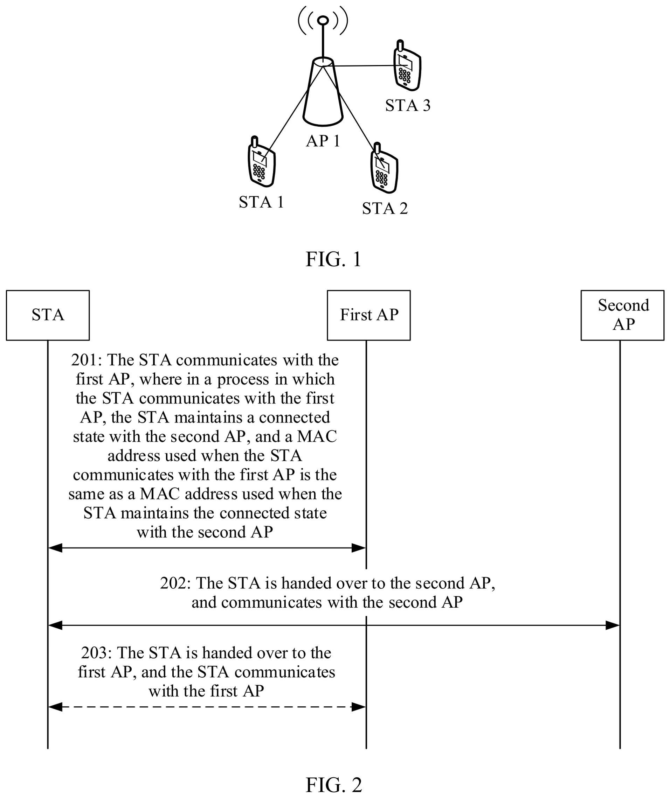

FIG. 1 is a diagram of an architecture of a communication system according to an embodiment of this application. The communication system may include one or more APs and one or more STAs. FIG. 1 shows one access point like an AP 1, and three stations such as a STA 1, a STA 2, and a STA 3. For example, the method provided in this embodiment of this application is applicable to data communication between one AP and one or more STAs (for example, communication between the AP 1 and the STA 1 shown in FIG. 1, or communication between the AP 1 and each of the STA 1 and the STA 2 shown in FIG. 1), or is applicable to communication between APs (communication between the AP 1 and the AP 2 shown in FIG. 1), or is applicable to communication between STAs (communication between the STA 2 and the STA 3 shown in FIG. 1). The methods provided in embodiments of this application are applicable to but are not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

It can be understood that, in FIG. 1, an example in which the STA is a mobile phone and the AP is a router is used. This does not mean that types of the AP and the STA in embodiments of this application are limited. In addition, FIG. 1 shows only one AP and three STAs as an example, but there may be more or less APs or STAs. This is not limited in this embodiment of this application.

The following describes in detail a communication method in embodiments of this application.

FIG. 2 is a schematic flowchart of a communication method according to an embodiment of this application. The method may be applied to a first communication apparatus, a second communication apparatus, and a third communication apparatus. In an example, the first communication apparatus, the second communication apparatus, and the third communication apparatus may be Wi-Fi chips, modules, processing systems, or the like disposed in different Wi-Fi devices. In another example, the first communication apparatus may be a STA, and the second communication apparatus and the third communication apparatus may be different APs. In still another example, the first communication apparatus, the second communication apparatus, and the third communication apparatus may all be multi-link devices (multi-link device, MLD). For example, the first communication apparatus may be a non-AP MLD, and the second communication apparatus and the third communication apparatus may be different AP MLDs. Details are not enumerated in this embodiment of this application. For ease of description, the following uses an example in which the first communication apparatus is a STA, the second communication apparatus is a first AP, and the third communication apparatus is a second AP for description. However, this should not be understood as a limitation on embodiments of this application. For related descriptions of the STA, an AP, and the like, refer to FIG. 1. Details are not described herein again. As shown in FIG. 2, the method includes the following steps.

201: The STA communicates with the first AP. In a process in which the STA communicates with the first AP, the STA maintains a connected state with the second AP, and a MAC address used when the STA communicates with the first AP is the same as a MAC address used when the STA maintains the connected state with the second AP.

That the STA maintains the connected state with the second AP may include that the STA maintains the connected state with the second AP through a MAC layer and a PHY layer. In other words, the STA may maintain the connected state with the second AP through a Wi-Fi protocol layer. Alternatively, the STA establishes a backup link in advance, and the backup link may be used by the STA to maintain the connected state with the second AP, or the backup link is a link between the STA and the second AP. When establishing the backup link, the STA may not obtain an IP address of the second AP, so that the STA can maintain the connected state with the second AP. If the STA does not obtain the IP address of the second AP, the STA may not perform TCP/IP communication. In this embodiment of this application, the second AP is used as an example for description. However, during actual application, the STA may maintain a connected state with one or more APs. For example, in addition to maintaining the connected state with the second AP, the STA may further maintain the connected state with a third AP (that is, the STA may establish one or more backup links in advance). Examples are not enumerated herein. For related descriptions of the STA maintaining the connected state with the third AP, refer to the descriptions of the STA maintaining the connected state with the second AP.

That the STA communicates with the first AP includes: The STA communicates with the first AP through the MAC layer, the PHY layer, and a TCP/IP layer. In other words, the STA needs to perform data transmission with the first AP through the TCP/IP layer. Alternatively, the STA may maintain a communication state with the first AP through the MAC layer, the PHY layer, and the TCP/IP layer. Alternatively, the STA may have a communication link, and the communication link is used by the STA to maintain the communication state with the first AP. For example, the STA may send a data frame to the first AP. For another example, the STA may receive a data frame from the first AP. For another example, the STA may perform sensing with the first AP. A specific manner in which the STA communicates with the first AP is not limited in embodiments of this application.

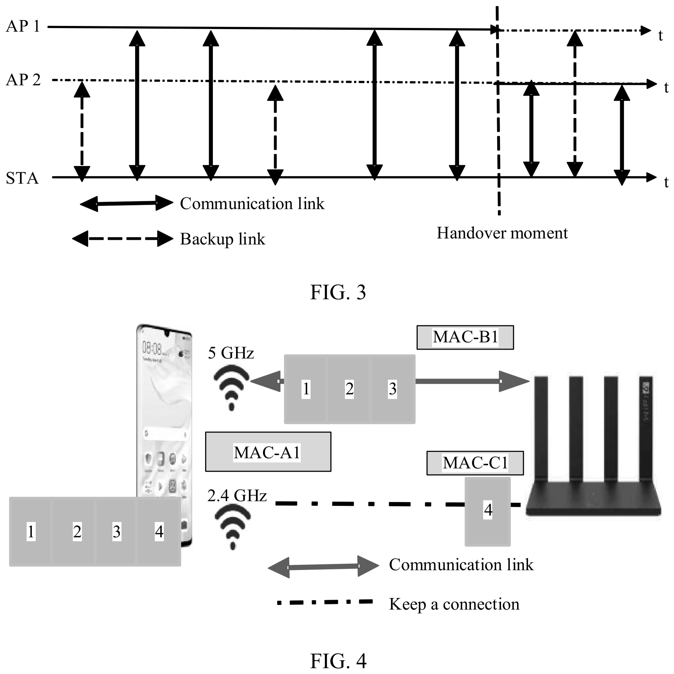

FIG. 3 is a diagram of a communication scenario according to an embodiment of this application. In FIG. 3, an AP 1 represents a first AP, an AP 2 represents a second AP, and a horizontal coordinate represents time (time). Before a handover moment (namely, prior to the handover moment), a solid line represents a communication link between a STA and the AP 1, and a dashed line represents a link, for example, a backup link, that keeps a connection between the STA and the AP 2. For example, the STA may maintain a connected state with the AP 2 by sending a null frame (no data exchange) like a null data packet (null data packet, NDP) frame to the AP 2. For example, a frequency at which the STA sends the null frame to the AP 2 may be less than a frequency at which the STA communicates with the AP 1. Power consumption can be effectively reduced in a manner of maintaining the connected state by using the null frame. For another example, the STA may indicate the AP 2 to keep a sleep state. For example, the STA sends a null frame to the AP 2. A MAC header of the null frame may include a power save (power save) field, and the power save field may indicate whether the AP keeps the sleep state. After the handover moment (that is, later than the handover moment), the solid line represents a communication link between the STA and the AP 2, and the dashed line represents a link, for example, a backup link, that keeps a connection between the STA and the AP 1. For related descriptions after the handover moment, refer to the descriptions before the handover moment. Details are not described herein again.

In an example, the first AP and the second AP may belong to a same ESS. In a roaming scenario, that is, if the first AP and the second AP belong to the same ESS, when the STA separately communicates with the two APs by using different MAC addresses, the two APs consider the STA to be different STAs. For example, the second AP considers a STA that communicates with the first AP is different from a STA that communicates with the second AP. Therefore, the second AP re-initiates a connection, resulting in communication interruption of the STA. In this embodiment of this application, when the firstAP and the second AP belong to the same ESS, the STA separately communicates with the first AP and the second AP by using a same MAC address, so that a case in which communication of the STA is interrupted because the second AP re-initiates a connection can be effectively avoided, thereby improving network handover efficiency. In addition, a delay in transmitting and receiving data by the STA is further reduced, and user experience is improved.

In another example, an SSID of the second AP is different from an SSID of the first AP. Therefore, the STA can be quickly handed over to the second AP, thereby effectively reducing an access delay caused because the STA needs to perform a handover procedure. There is a manner A. For example, for networks with different SSIDs, when the STA communicates with an AP, the STA does not maintain the connected state with another AP. Instead, when a handover needs to be performed, the STA is disconnected from the AP and establishes communication with the another AP. Therefore, in a process in which the STA establishes a connection to the another AP, the STA cannot perform normal communication. Consequently, a delay in transmitting and receiving data by the STA is high. In comparison with the manner A, in this embodiment of this application, a process in which the STA disconnects communication and establishes communication with another AP can be effectively avoided, a network handover delay is reduced, and a delay in transmitting and receiving data by the STA is reduced. In this way, the STA is not disconnected as much as possible, and user experience is improved.

In still another example, the STA may store information about the second AP. The information about the second AP may include at least one of an SSID, a password, or an encryption manner of the second AP. In other words, the STA stores information about an AP historically connected to the STA. For example, the second AP stored in the STA and the first AP may belong to a same ESS, or an SSID of the second AP is different from an SSID of the first AP. During actual application, the STA may maintain the connected state with one or more APs. Therefore, the STA may also store information about the one or more APs. For example, the STA may store the information about the second AP, information about the third AP, and the like, which are not listed one by one herein.

The first AP and the second AP shown in this embodiment of this application may be different Wi-Fi devices, or on different frequency bands, or on different frequency bands in a same Wi-Fi device, or in different links in a same Wi-Fi device, or the like. FIG. 4 is a diagram of another communication scenario according to an embodiment of this application. FIG. 4 is shown by using an example in which a STA is a mobile phone and an AP is a router, but should not be construed as a limitation on this embodiment of this application. As shown in FIG. 4, the STA may communicate with a first AP over a 5 GHz frequency band, and maintain a connected state with a second AP over a 2.4 GHz frequency band. The STA caches data 1 to data 4, where the data 1 to the data 3 may be data frames transmitted by the STA over 5 GHz, and the data 4 may be a null frame transmitted by the STA over 2.4 GHz. The STA may use a same MAC address. As shown in FIG. 4, the STA may separately maintain, by using MAC-A1, in a communication state with an AP connected to 5 GHz, and maintain a connected state with an AP connected to 2.4 GHz.

For example, when the STA maintains the connected state with both the second AP and a third AP, the first AP and the second AP may belong to a same ESS, and an SSID of the first AP is different from an SSID of the third AP. Alternatively, the first AP, the second AP, and the third AP belong to a same ESS. Alternatively, SSIDs of the first AP, the second AP, and the third AP are different. Relationships between the first AP, the second AP, and the third AP are not listed one by one.

202: The STA is handed over to the second AP, and communicates with the second AP.

In an example, in a process in which the STA communicates with the second AP, the STA may maintain the connected state with the first AP. In another example, in a process in which the STA communicates with the second AP, the STA may maintain the connected state with the third AP. In still another example, in a process in which the STA communicates with the second AP, the STA may maintain the connected state with both the first AP and the third AP. For related descriptions of the connected state, refer to step 201. Details are not described herein again. For related descriptions of communication between the STA and the second AP, refer to the descriptions of communication between the STA and the first AP in step 201. Details are not described herein again. A MAC address used when the STA communicates with the second AP is the same as a MAC address used when the STA maintains the connected state with another AP (for example, the first AP or the third AP). A link on which the STA communicates with the second AP may be referred to as a communication link, and a link on which the STA maintains the connected state with another AP (for example, the first AP or the third AP) is referred to as a backup link.

For example, when a first handover condition is met, the STA may be handed over to the second AP. The first handover condition may be related to signal quality, a service delay of the STA, a tolerance degree of a service of the STA for signal quality, or the like. For example, the first handover condition may be at least one of the following.

First, signal quality between the STA and the first AP is less than or equal to a quality threshold. For example, when the network quality between the STA and the first AP is poor, or when the signal quality (or network quality) between the STA and the first AP deteriorates, the STA may be handed over to the second AP. Therefore, it can be ensured in real time that the STA can use a network with good quality for communication.

Second, a communication link between the STA and the first AP is disconnected. A specific reason why the communication link is disconnected is not limited in this embodiment of this application.

Third, the signal quality between the STA and the first AP is less than signal quality between the STA and the second AP. For example, signal quality of the communication link is lower than communication quality of the backup link.

Fourth, an amount of cached data of the STA is greater than or equal to a data amount threshold. For example, a large data amount has been cached in a cache queue of the STA, and a reason for caching the data amount may be that the signal quality between the STA and the first AP is less than or equal to the quality threshold.

Fifth, a probability that the STA successfully sends data is less than or equal to a probability threshold. For example, a probability that the STA sends data through a PHY layer and receives an acknowledgement (acknowledgement, ACK) frame of the data is less than or equal to the probability threshold. The ACK frame is a control frame. The handover condition shown herein may alternatively be replaced with: a probability that the STA fails to send data is greater than or equal to the probability threshold. For example, a probability that the STA sends data through the PHY layer and receives a negative acknowledgement (negative acknowledgement, NACK) frame of the data is greater than or equal to the probability threshold. The NACK frame is a control frame. When the probability that the STA successfully sends data is equal to the probability threshold, the STA may be handed over to the second AP, or the STA may not be handed over to the second AP. A specific value of the probability threshold is not limited in this embodiment of this application.

Sixth, a delay between sending data and receiving a response frame of the data by the STA is greater than or equal to a delay threshold. For example, time from time at which the STA sends data through the PHY layer to time at which the STA receives a response frame of the data frame may be a delay. The response frame may be a data frame. For example, the data may include a heartbeat packet or a network diagnostic tool (packet internet groper, PING) packet. The heartbeat packet or the PING packet listed herein may be application-level data. In other words, when an application delay of the STA is greater than or equal to the delay threshold, it indicates that the application delay of the STA is excessively high, and the AP needs to be switched.

In a possible implementation, the method shown in FIG. 2 may further include the following.

203: The STA is handed over to the first AP, and the STA communicates with the first AP.

For example, when a second handover condition is met, the STA may be handed over to the first AP.

For example, the second handover condition may be at least one of the following.

First, signal quality between the STA and the second AP is less than or equal to a quality threshold. For example, when network quality between the STA and the second AP is poor, the STA may be handed over to another AP (for example, the first AP or the third AP). Second, a communication link between the STA and the second AP is disconnected. Third, the signal quality between the STA and the second AP is lower than signal quality between the STA and another AP. Fourth, an amount of cached data of the STA is greater than or equal to a data amount threshold. Fifth, a probability that the STA successfully sends data is less than or equal to a probability threshold. Sixth, a delay between sending data and receiving a response frame of the data by the STA is greater than or equal to a delay threshold.

For related descriptions of the second handover condition, refer to the first handover condition. Details are not described herein again.

For example, step 203 may alternatively be replaced with the following: The STA is handed over to the third AP, and the STA communicates with the third AP.

For related descriptions of the third AP, refer to the description in step 201. Details are not described herein again.

In this embodiment of this application, in a process of communicating with the first AP, the station maintains the connected state with the second AP, so that the station can be quickly and effectively handed over to the second AP, thereby reducing a network handover delay.

In this embodiment of this application, the STA establishes the backup link in advance, so that a data transmitting and receiving delay in a network handover process can be effectively reduced. Especially in a network handover scenario, according to this embodiment of this application, network quality of the STA can be effectively ensured, and a delay caused by network handover can be reduced.

The following describes the communication method provided in embodiments of this application with reference to a specific scenario.

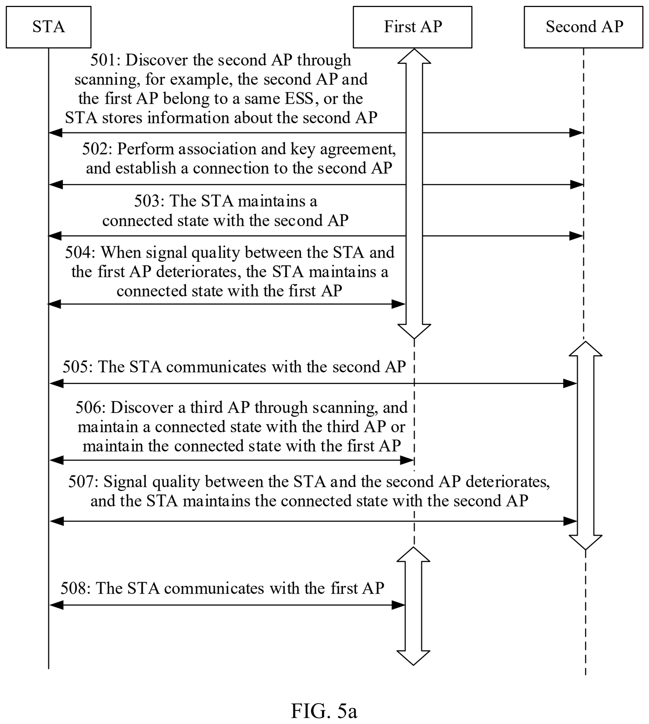

FIG. 5a is a diagram of a scenario of a communication method according to an embodiment of this application. For example, in FIG. 5a, a STA is a terminal device and an AP is a router. An initial state in FIG. 5a is that the terminal device is connected to a network A (a first AP shown in FIG. 5a) of the router, and the router further has a plurality of networks, for example, a network M (a second AP shown in FIG. 5a) and a network N. The router may cover a plurality of networks, for example, the network A, the network M, and the network N. The network A, the network M, and the network N shown above may respectively correspond to different APs in the router. For example, a network covered by the router may be a roaming network with a same SSID. Alternatively, the first AP and the second AP shown in FIG. 5a may be APs with different SSIDs. In the initial state, the terminal device has communicated with the network A through a first link, that is, the terminal device communicates with the first AP through a communication link. An intersection of an arrow and a dashed line in FIG. 5a is a moment at which the STA performs AP handover, a time period in which the STA performs AP handover, or the like.

For example, as shown in FIG. 5a, the STA may perform the following steps.

501: The STA discovers the second AP through scanning. For example, the STA and the first AP belong to a same ESS, or the STA stores information about the second AP.

The STA discovers a same ESS network or the stored network M through scanning, and a backup link may be established.

Because the AP may be configured to provide a radio signal, the AP and the network in this embodiment of this application may be in a mutual replacement relationship. For example, the network M may be replaced with the second AP, and the network A may be replaced with the first AP. Examples are not listed one by one. When referring to a specific example, the network may be used to replace the AP, and the following description is also applicable. 502: The STA performs association and key agreement, and establishes a connection to the second AP.

If the STA is not connected to the network M or signal quality (or network quality) of the network M is better than signal quality of the connected network A, the STA may establish a connection to the second AP through steps such as association and key agreement, and establish, through the backup link, a connection to the network M scanned by the STA. A link established between the STA and the first AP may be a first link.

503: The STA maintains a connected state with the second AP.

504: When signal quality between the STA and the first AP deteriorates, the STA maintains the connected state with the first AP.

When signal quality of the first link deteriorates, and signal quality of the backup link is better, the STA may stop communicating with the network A, and maintain the connected state with the network A.

505: The STA communicates with the second AP.

506: Discover a third AP through scanning, and maintain the connected state with the third AP or maintain the connected state with the first AP.

507: Signal quality between the STA and the second AP deteriorates, and the STA maintains the connected state with the second AP.

When the signal quality of the network M deteriorates and the signal quality of the backup link is better, the STA may stop communicating with the network A, and keep a connection to the network M.

508: The STA communicates with the first AP.

In specific implementation, the STA may further continuously perform the foregoing steps based on a handover condition, or cyclically perform the foregoing steps based on an actual requirement, or the like. For example, the STA may further continue to perform step 502 to step 508, or perform step 504 to step 508, which are not listed one by one herein. FIG. 5a is merely an example. In specific implementation, the STA may further perform more or fewer steps than those in FIG. 5a. Details are not described herein again.

In comparison with dual Wi-Fi in which a user is visible or a STA performs communication on two links at the same time, in the method provided in this embodiment of this application, although there may be a plurality of links, the plurality of links are not used for concurrent data communication, and one of the plurality of links is used for communication.

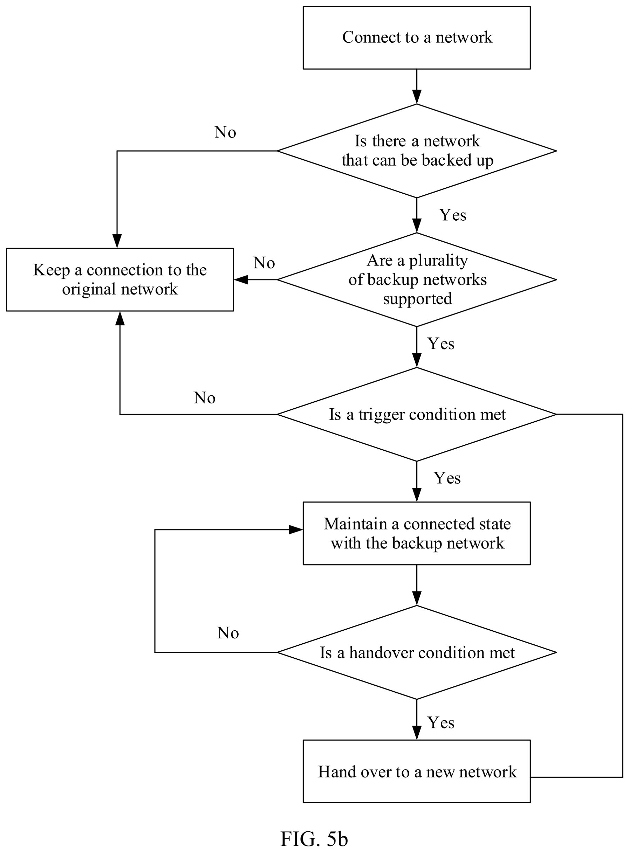

FIG. 5b is a schematic flowchart of a communication method according to an embodiment of this application. The method shown in FIG. 5b may be applied to the methods shown in FIG. 2 to FIG. 4 and FIG. 5a. In FIG. 5b, an original network may be understood as a first AP, and a new network may be understood as a second AP. For example, the initial state may be that the STA is connected to a network, for example, the STA communicates with the original network. Then, the STA determines whether there is a network that can be backed up. In other words, the STA may discover a new network through scanning. When there is a network that can be backed up, the STA may determine whether the STA supports a plurality of backup networks. For example, the STA may determine whether the STA supports a capability of maintaining a connected state through the backup network. When supporting the capability, the STA may determine whether a trigger condition is met. For example, the STA may determine whether the STA needs to connect to the backup network. For example, when signal quality of an original network is very strong, for example, greater than certain signal quality, the STA may not be connected to the backup network, but keeps a connection to the original network (that is, the STA may communicate with the original network). For another example, when the signal quality of the original network is lower than the certain signal quality, the STA may be connected to the backup network, to maintain the connected state with the backup network. When the STA maintains the connected state with the backup network, the STA still maintains a communication state with the original network. When a handover condition is met, the STA may be handed over to a new network (namely, the backup network). When the handover condition is not met, the STA may continue to maintain the connected state with the backup network, and communicate with the original network. For descriptions of the handover condition, refer to FIG. 2. Details are not described herein again.

As shown in FIG. 5b, when there is no network that can be backed up, or the STA does not support a plurality of backup networks, or the STA does not support a capability of maintaining the connected state through the backup network, the STA may continue to communicate with the original network, to keep a connection to the original network. The original network and the new network shown in this embodiment of this application are relative. For example, before the STA is handed over, the STA may communicate with the original network and maintain the connected state with the new network. After the STA is handed over, the STA may communicate with the new network and maintain the connected state with the original network (or another network). Descriptions of the original network and the new network are also applicable to other embodiments.

The STA may perform the foregoing determining steps, or the STA may not perform the foregoing determining steps, but performs a determining result when a corresponding condition is met.

In specific implementation, the STA may perform more or fewer steps than the steps shown in FIG. 5b. The steps shown in FIG. 5b are not limited in this embodiment of this application. The method shown in FIG. 5b may be combined with another embodiment. The method shown in FIG. 5b may be applied to FIG. 2, FIG. 5a, FIG. 6a, or the like. For example, in the method shown in FIG. 2, when communicating with the first AP, the STA may determine, according to the determining method shown in FIG. 5b, whether the STA can be handed over to the second AP. A specific combination manner is not described in detail herein.

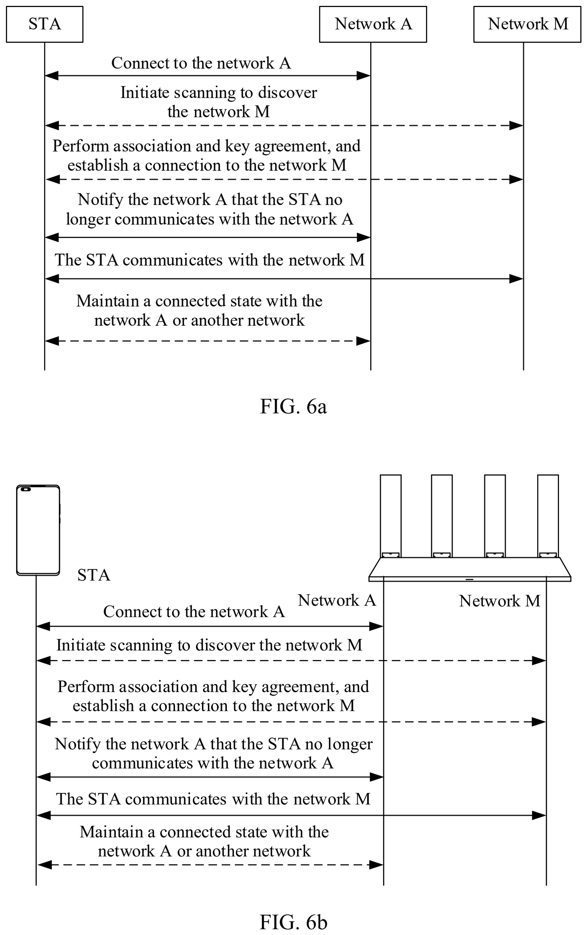

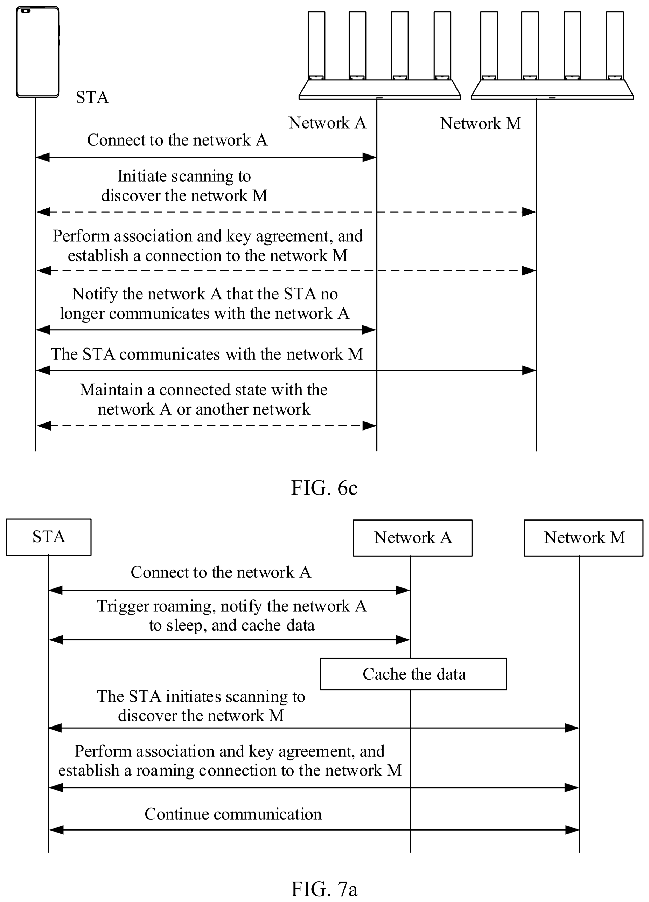

FIG. 6a is a schematic flowchart of a communication method according to an embodiment of this application. In FIG. 6a, a network A is an original network of a STA, or is a network that communicates with the STA, or in an initial state, the STA maintains a communication state with the network A. In an example, as shown in FIG. 6b, the network A may be an ESS environment. For example, the network A and a network M are ESS networks with a same SSID. In another example, as shown in FIG. 6c, the network A and the network M may be networks with different SSIDs. In FIG. 6c, the STA stores one or more previously connected networks, for example, one or more of a network B, a network C, and a network N (which is merely an example). For specific descriptions of the methods shown in FIG. 6b and FIG. 6c, refer to FIG. 6a. Details are not described below again.

As shown in FIG. 6a, the STA is connected to the network A, and a link between the STA and the network A may be referred to as an original link, a first link, or the like. A name of the link is not limited.

The STA initiates scanning to discover the network M. Then, the STA performs steps such as association and key agreement, to establish a connection to the network M. When communicating with the network A, the STA may maintain a connected state with the network M. A link between the STA and the network M may be referred to as a second link or the like, and a name of the link is not limited. A specific procedure in which the STA performs association and key agreement is not limited in this embodiment of this application.

When a handover condition is met, the STA may be handed over to the network M, to notify the network A that the STA no longer communicates with the network A. For example, the STA may send trigger information to the network A, where the trigger information may indicate that the network A no longer maintains a communication state with the STA; or the trigger information may be used to deactivate a communication state between the network A and the STA.

The STA communicates with network A. In addition, the STA may further maintain the connected state with the network A or another network. For example, the another network may be one or more of the network B, the network C, the network M, and the network N.

For specific descriptions of the method shown in FIG. 6a, refer to FIG. 2, FIG. 5a, FIG. 5b, and the like. Details are not described herein again.

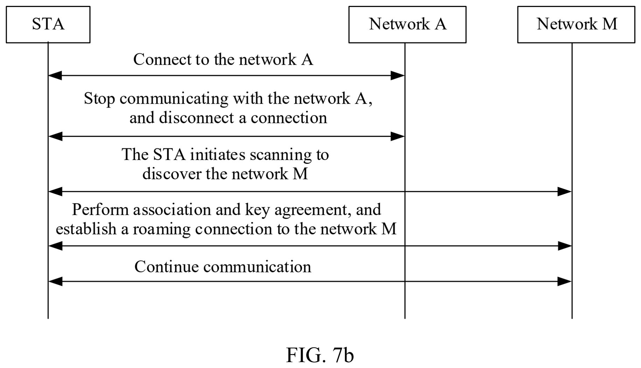

There is a communication method A. When a terminal is connected to a router, and the terminal needs to be handed over to a network, the terminal usually needs to be handed over to a same ESS network when network quality is poor. If a network is a roaming network, the terminal needs to be handed over to a same ESS network through a roaming process. As shown in FIG. 7a, the network A and the network M are a same ESS network. When the STA needs to be handed over between networks, roaming is triggered, the network A is notified to sleep, and data is cached. Then, the STA is connected to the network M. In a time period in which the STA indicates the network A to sleep until the STA is connected to the network M, an instantaneous service delay of the STA increases by more than 300 ms. As shown in FIG. 7b, when there is no roaming network, the STA needs to disconnect from the network A. As a result, the STA is disconnected from the network, and a service delay is increased. Specific steps of the methods shown in FIG. 7a and FIG. 7b are not described in detail in this embodiment of this application.

Compared with the methods shown in FIG. 7a and FIG. 7b, this embodiment of this application can effectively mitigate a case in which a delay is prolonged in the foregoing network handover process, or a case in which a STA is disconnected from a network and a service delay is increased. In this embodiment of this application, one or more backup networks (or referred to as backup links) are established before the STA performs network handover. That is, this embodiment of this application uses a parallel manner between the STA and the original network and a parallel manner between the STA and the backup network compared with a serial manner between the STA and the original network and a serial manner between the STA and the backup network shown in FIG. 7a and FIG. 7b. Therefore, when signal quality between the STA and the original network is poor, the STA can be handed over to a backup link without performing a handover process (including a roaming process), thereby effectively reducing a network handover delay, and reducing a delay in transmitting and receiving data.

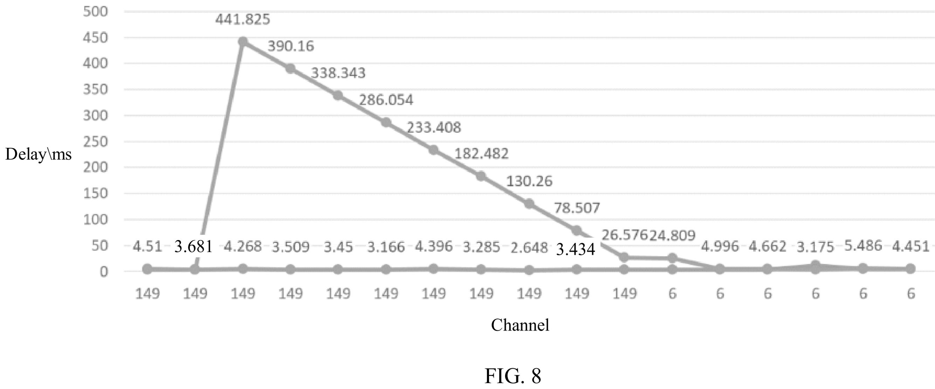

FIG. 8 is a simulation diagram corresponding to a method according to an embodiment of this application. A first line from top to bottom shown in FIG. 8 is a simulation result obtained by using the method shown in FIG. 7a, and a second line from top to bottom is a simulation result obtained by using the method provided in this embodiment of this application. FIG. 8 shows a ping delay of a test tool. It can be learned from FIG. 8 that a roaming handover delay in the method shown in this embodiment of this application is almost not affected by a roaming process. However, for the method A, a roaming delay is 400+ ms.

According to the method shown in this embodiment of this application, in an ESS network, concurrency of a backup link can effectively reduce waiting time of an original link (for example, the communication link shown above) due to scanning and connection during roaming, thereby reducing a delay. On networks with different SSIDs, establishing a backup link in advance can effectively reduce connection handover time caused by a reconnection process due to poor communication link quality or disconnection. Therefore, by establishing a backup link or a backup network (for example, the second AP shown above) in advance, a delay can be effectively reduced, experience of a user "never going offline" can be ensured as much as possible, and a network handover delay can also be significantly reduced.

The following describes a communication apparatus provided in an embodiment of this application.

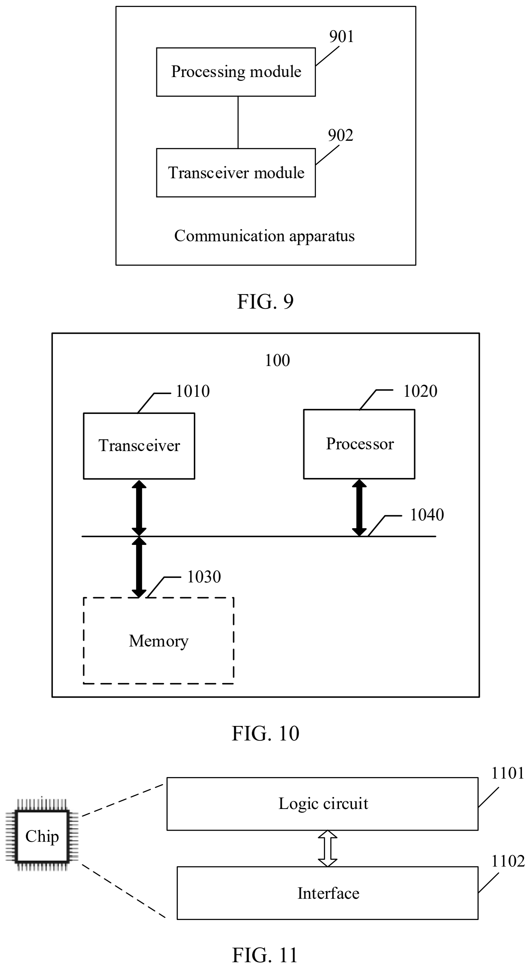

In this application, the communication apparatus is divided into function modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing module 901 and a transceiver module 902. The transceiver module 902 may implement a corresponding communication function, and the processing module 901 is configured to perform data processing. For example, the transceiver module 902 may also be referred to as a communication interface, a communication module, or the like.

In some embodiments of this application, the communication apparatus may be configured to perform an action performed by the communication apparatus in the foregoing method embodiments. In this case, the communication apparatus may be a WLAN device, or a chip, a functional module, or the like configured in the WLAN device, the transceiver module 902 is configured to perform operations related to sending and receiving of the STA in the foregoing method embodiments, and the processing module 901 is configured to perform operations related to processing of the STA in the foregoing method embodiments.

For example, the processing module 901 is configured to communicate with a first AP. For example, the processing module 901 may communicate with the first AP through the transceiver module 902, or communicate with a second AP through the transceiver module 902. Alternatively, the transceiver module 902 is configured to input or receive a data frame from the first AP, and then input the data frame to the processing module 901. Alternatively, the processing module 901 is configured to generate a data frame, and output the data frame to the transceiver module 902. The transceiver module 902 may be configured to send or output the data frame. Related descriptions of the processing module and the transceiver module are also applicable below, and details are not described below again.

The processing module 901 is further configured to be handed over to the second AP.

The processing module 901 is further configured to communicate with the second AP.

Optionally, the communication apparatus may further include a storage module. The storage module may be configured to store instructions and/or data. The processing module 901 may read the instructions and/or the data in the storage module, so that the communication apparatus implements the foregoing method embodiments.

It may be understood that specific descriptions of the transceiver module and the processing module in embodiments of this application are merely examples. For specific functions or steps performed by the transceiver module and the processing module, refer to the foregoing method embodiments. Details are not described herein again.

In the foregoing embodiments, for descriptions of the terms, refer to the descriptions in the foregoing method embodiments. Details are not described herein again.

The foregoing describes the communication apparatus in this embodiment of this application. The following describes possible product forms of the communication apparatus. It should be understood that any form of product that has a function of the communication apparatus in FIG. 9 falls within the protection scope of embodiments of this application. It should be further understood that the following description is merely an example, and does not limit a product form of the communication apparatus in embodiments of this application.

In a possible implementation, in the communication apparatus shown in FIG. 9, the processing module 901 may be one or more processors, and the transceiver module 902 may be a transceiver; or the transceiver module 902 may be a sending module and a receiving module, the sending module may be a transmitter, and the receiving module may be a receiver. The sending module and the receiving module are integrated into one component, for example, a transceiver. In this embodiment of this application, the processor and the transceiver may be coupled, or the like. A manner of a connection between the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is outputted by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information, and then processed information is received by the processor.

As shown in FIG. 10, a communication apparatus 100 includes one or more processors 1020 and a transceiver 1010.

In some embodiments of this application, the communication apparatus may be configured to perform steps, functions, or the like performed by the STA in the foregoing method embodiment.

For example, the processor 1020 is configured to communicate with a first AP. For example, the processor 1020 may communicate with the first AP through the transceiver 1010, and the like. Alternatively, the transceiver 1010 is configured to receive a data frame from the first AP, and then input the data frame to the processor 1020. Alternatively, the processing module 901 is configured to generate a data frame, and output the data frame to the transceiver 1010. The transceiver 1010 may be configured to send the data frame. Related descriptions of the processor and the transceiver are not described in detail below.

The processor 1020 is further configured to be handed over to a second AP to communicate with the second AP.

Specific descriptions of the transceiver and the processor in embodiments of this application are merely examples. For specific functions, steps, or the like performed by the transceiver and the processor, refer to the foregoing method embodiments. Details are not described herein again.

In the foregoing embodiments, for descriptions of the terms, refer to the descriptions in the foregoing method embodiments. Details are not described herein again.

In each implementation of the communication apparatus shown in FIG. 10, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 100 may further include one or more memories 1030, configured to store program instructions, data, and/or the like. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor.

In embodiments of this application, a specific connection medium among the transceiver 1010, the processor 1020, and the memory 1030 is not limited. In this embodiment of this application, the memory 1030, the processor 1020, and the transceiver 1010 are connected through a bus 1040 in FIG. 10. The bus is indicated by using a thick line in FIG. 10. A manner of connection between other components is merely an example for description, and is not limited thereto. The bus may be classified into an address bus, a data bus, a control bus, and the like. For ease of representation, only one thick line is for representing the bus in FIG. 10, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like. The processor can implement or execute the methods, the steps, and the logical block diagrams disclosed in embodiments of this application. The general purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a read-only memory (read-only memory, ROM), or a compact disc read-only memory (compact disc read-only memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 1020 is mainly configured to: process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1020 may read the software program in the memory 1030, interpret and execute instructions of the software program, and process data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 1020. The processor 1020 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus described in this embodiment of this application may further have more components than those in FIG. 10, and the like. This is not limited in this embodiment of this application. The methods performed by the processor and the transceiver are merely examples. For specific steps performed by the processor and the transceiver, refer to the methods described above.

In another possible implementation, in the communication apparatus shown in FIG. 9, the processing module 901 may be one or more logic circuits, and the transceiver module 902 may be an input/output interface, or may be referred to as a communication interface, an interface circuit, an interface, or the like. Alternatively, the transceiver module 902 may be a sending module and a receiving module. The sending module may be an output interface, and the receiving module may be an input interface. The sending module and the receiving module are integrated into one module, for example, an input/output interface. As shown in FIG. 11, a communication apparatus shown in FIG. 11 includes a logic circuit 1101 and an interface 1102. That is, the processing module 901 may be implemented by using the logical circuit 1101, and the transceiver module 902 may be implemented through the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 is an example in which the communication apparatus is a chip. The chip includes the logic circuit 1101 and the interface 1102.

In this embodiment of this application, the logic circuit and the interface may be further coupled to each other. A specific manner of connection between the logical circuit and the interface is not limited in this embodiment of this application.

In some embodiments of this application, the communication apparatus may be configured to perform steps, functions, or the like performed by the STA in the foregoing method embodiment.

For example, the logic circuit 1101 is configured to communicate with a first AP, and be handed over to a second AP to communicate with the second AP.

It may be understood that specific descriptions of the logic circuit and the interface in embodiments of this application are merely examples. For specific functions, steps, or the like performed by the logic circuit and the interface, refer to the foregoing method embodiments. Details are not described herein again.

In the foregoing embodiments, for descriptions of the terms, refer to the descriptions in the foregoing method embodiments. Details are not described herein again.

It may be understood that the communication apparatus shown in this embodiment of this application may implement the method provided in embodiments of this application in a form of hardware or in a form of software. This is not limited in embodiments of this application.

An embodiment of this application further provides a communication system. The communication system includes a first communication apparatus and a second communication apparatus. For descriptions of the first communication apparatus and the second communication apparatus, refer to the foregoing descriptions.

In addition, this application further provides a computer program. The computer program is used to implement operations and/or processing performed by a STA in the method provided in this application.

This application further provides a computer-readable storage medium. The computer-readable storage medium stores computer code. When the computer code is run on a computer, the computer is enabled to perform an operation and/or processing performed by the STA in the method provided in this application.

This application further provides a computer program product. The computer program product includes computer code or a computer program. When the computer code or the computer program is run on a computer, an operation and/or processing performed by the STA in the method provided in this application is performed.

In the several embodiments provided in this application, it should be understood that the disclosed system, apparatus, and method may be implemented in other manners. For example, the described apparatus embodiment is merely an example. For example, the foregoing module division may be logical function division and there may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or modules, or electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of software product. The computer software product is stored in a readable storage medium and includes several instructions for instructing a computer device (which may be a personal computer, a server, a network device, or the like) to perform all or some of the steps in the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
communicating with a first access point AP, wherein in a process in which a STA communicates with the first AP, the STA maintains a connected state with a second AP, and a medium access control MAC address used when the STA communicates with the first AP is the same as a MAC address used when the STA maintains the connected state with the second AP; and
handing over to the second AP, to communicate with the second AP.

2. The method according to claim 1, wherein in a process in which the STA communicates with the second AP, the STA maintains a connected state with the first AP.

3. The method according to claim 1 or 2, wherein the first AP and the second AP belong to a same extended service set ESS, or a service set identifier SSID of the second AP and a service set identifier SSID of the first AP are different.

4. The method according to any one of claims 1 to 3, wherein the STA stores information about the second AP.

5. The method according to any one of claims 1 to 4, wherein that the STA maintains the connected state with the second AP comprises: the STA maintains the connected state with the second AP through a medium access control MAC layer and a physical PHY layer; and
that the STA communicates with the first AP comprises:
the STA communicates with the first AP through the MAC layer, the PHY layer, and a transmission control protocol/internet protocol TCP/IP layer.

6. The method according to any one of claims 1 to 5, wherein handing over to the second AP comprises:
handing over to the second AP when at least one of the following is met:
signal quality between the STA and the first AP is less than or equal to a quality threshold;
a communication link between the STA and the first AP is disconnected; and
the signal quality between the STA and the first AP is less than signal quality between the STA and the second AP.

7. The method according to any one of claims 1 to 6, wherein handing over to the second AP comprises:
handing over the STA to the second AP when at least one of the following is met:
a probability that the STA successfully sends data is less than or equal to a probability threshold; and
a delay between sending data and receiving a response frame of the data by the STA is greater than or equal to a delay threshold.

8. The method according to any one of claims 1 to 7, wherein the method further comprises:
handing over to the first AP, wherein the STA communicates with the first AP.

9. A communication apparatus, comprising:
a processing module, configured to communicate with a first access point AP, wherein in a process in which the communication apparatus communicates with the first AP, the communication apparatus maintains a connected state with a second AP, and a medium access control MAC address used when the communication apparatus communicates with the first AP is the same as a MAC address used when the communication apparatus maintains the connected state with the second AP; and
the processing module is further configured to be handed over to the second AP to communicate with the second AP.

10. The apparatus according to claim 9, wherein in a process in which the communication apparatus communicates with the second AP, the communication apparatus maintains a connected state with the first AP.

11. The apparatus according to claim 9 or 10, wherein the first AP and the second AP belong to a same extended service set ESS, or a service set identifier SSID of the second AP and a service set identifier SSID of the first AP are different.

12. The apparatus according to any one of claims 9 to 11, wherein the communication apparatus stores information about the second AP.

13. The apparatus according to any one of claims 9 to 12, wherein that the communication apparatus maintains the connected state with the second AP comprises: the communication apparatus maintains the connected state with the second AP through a medium access control MAC layer and a physical PHY layer; and
that the communication apparatus communicates with the first AP comprises: the communication apparatus communicates with the first AP through the MAC layer, the PHY layer, and a transmission control protocol/internet protocol TCP/IP layer.

14. The apparatus according to any one of claims 9 to 13, wherein handing over to the second AP comprises:
handing over to the second AP when at least one of the following is met:
signal quality between the communication apparatus and the first AP is less than or equal to a quality threshold;
a communication link between the communication apparatus and the first AP is disconnected; and
the signal quality between the communication apparatus and the first AP is less than signal quality between the communication apparatus and the second AP.

15. The apparatus according to any one of claims 9 to 14, wherein handing over to the second AP comprises:
handing over the communication apparatus to the second AP when at least one of the following is met:
a probability that the communication apparatus successfully sends data is less than or equal to a probability threshold; and
a delay between sending data and receiving a response frame of the data by the communication apparatus is greater than or equal to a delay threshold.

16. The method according to any one of claims 1 to 7, wherein
the processing module is further configured to be handed over to the first AP, wherein the communication apparatus communicates with the first AP.

17. A communication apparatus, comprising a processor, wherein the processor is configured to perform the method according to any one of claims 1 to 8.

18. A communication apparatus, comprising a logic circuit and an interface, wherein the logic circuit is coupled to the interface; and
the interface is configured to input and/or output information, and the logic circuit is configured to perform the method according to any one of claims 1 to 8.

19. A computer-readable storage medium, wherein the computer-readable storage medium is configured to store a computer program, and when the computer program is executed, the method according to any one of claims 1 to 8 is performed.
